# EUROPEAN PATENT SPECIFICATION

(11) **EP 4 371 788 B1**
(45) Date of publication and mention of the grant of the patent: **02.07.2025**
(21) Application number: 23210506.4
(22) Date of filing: 17.11.2023
(51) Int. Cl.: B60C 11/16

(54) **TIRE STUD WITH ANCHORING ELEMENTS**
REIFENBOLZEN MIT VERANKERUNGSELEMENTEN
CRAMPON DE PNEU AVEC ÉLÉMENTS D'ANCRAGE

(30) Priority: 21.11.2022 US 202218057445
(43) Date of publication of application: 22.05.2024
(73) Proprietor: The Goodyear Tire & Rubber Company, Akron, OH 44316 (US)
(72) Inventor: PONS, Frederic Michel-Jean, 57100 Thionville (FR)
(74) Representative: Kutsch, Bernd

(56) References cited:
- DE-A1- 102011 089 314
- DE-A1- 102015 219 368
- KR-A- 20100 052 186

## Description

### Field of the Invention

The present invention relates to a tire stud comprising a stud body and one or more foldable anchoring elements attached to the stud body. The present invention further relates to a tire, preferably a pneumatic tire, comprising said tire stud and to a method of inserting said tire stud into a tire tread. Such tire stud is of particular value for use on winter, snow and/or ice tires.

### Background of the Invention

Studs for winter tires have been known for decades and have helped to significantly improve traction characteristics on snow and particularly ice-covered surfaces to improve the grip of the tire to icy roads and other icy pavements. However, conventional tire studs also have some drawbacks which have limited their use in winter tires. For example, conventional tire studs typically have a body which is made of a metal material, such as aluminum, and have a pin extending from the body for ensuring non-skid behavior of the tire on icy roads. Recently studs based on polymeric material have been developed, an example of a polymer stud is given in U.S. Patent Publication No. 2021/0008930.

In any case, the use of polymeric material in tire studs is not very well-established and there is still a need for improvement in stud design. In particular, there is always a need to improve stud retention in the tire tread for polymeric stud body. In this regard, with the tire stud of the present invention, it was found that by adapting the design of the polymeric stud body of a tire stud it was possible to improve its durability compared to tire studs known in the art.

Further tire studs with a stud body having anchoring means to improve stud retention in the tread portion are known from DE102015219368A1, DE1 02011 089314A1 and KR20100052186A. However these documents fail to disclose a polymeric material of the stud body.

### Summary of the Invention

The invention relates to a tire stud in accordance with claim 1, to a tire in accordance with claim 14 and to a method in accordance with claim 15.

Dependent claims refer to preferred embodiments of the invention.

In a preferred aspect of the invention, a tire stud is provided comprising a stud body comprising at least one polymer and a pin; wherein the stud body comprises a top portion P_{T}, an intermediate portion P, and a bottom portion P_{B}, P_{T} being adjacent to P_{I} being adjacent to P_{B}; and wherein, in P_{B}, the tire stud further comprises n foldable anchoring elements E_{B}(n), with n = 1 or more, attached to the stud body, wherein each foldable anchoring element extends axially outward, i.e. away, from the stud body.

Due to the one or more foldable anchoring elements of the tire stud, the tire studs according to the present invention are better retained in the borehole of the tread of the pneumatic tire increasing greatly the durability of the tire stud and their efficacy for winter, snow and/or ice pneumatic tires.

Furthermore, the present invention relates to a pneumatic tire comprising at least one tire stud according to the present invention.

### Definitions

In the context of the present invention, the expression "each foldable or bendable anchoring element extends radially outward from the stud body" means that said element extends at an angle > 0°, preferably in the range of from 1° to 170°, more preferably in the range of from 2° to 160°, outward from the stud body.

In the context of the present invention, the term "inserted position" for the tire stud refers to the position of the tire stud once it is embedded in a pneumatic tire (tread).

In the context of the present invention, the term "pre-insertion position" or "expansion position" for the tire stud refers to the position of the tire stud as produced and not embedded into a pneumatic tire (tread).

In the context of the present invention, the term "radial" or "radial direction" refers to a length or distance that is parallel to the axis from the top of the pin of the tire stud to the bottom of the stud body. Hence, the radial direction is parallel to the axis of rotation or to the symmetry axis of the tire stud, if any. "Radial" also refers to the direction when the tire stud is inserted into the tread of a tire, i.e., in accordance with its intended use. Hence, a "radial" direction of the tire stud is also a radial direction of the tire.

In the context of the present invention, the term "axial" or "axial direction" refers to a length or distance that is perpendicular to the radial direction. "Axial" also refers to the direction when the tire stud is inserted into the tread of a tire, i.e., in accordance with its intended use. Hence, an "axial" direction of the tire stud is also an axial direction of the tire, i.e., parallel to the axis of rotation of the tire.

### Brief Description of the Drawings

The invention will be described by way of example and with reference to the accompanying drawings in which:
FIG. 1 is a schematic cross-sectional view of the assembly of a tire stud according to a first embodiment of the present invention into a pneumatic tire tread;
FIG. 2 is a schematic top view of the tire stud of FIG. 1;
FIG. 3 is a three-dimensional view of a tire stud according to a second embodiment of the present invention;
FIG. 4 is a schematic top view of the tire stud of FIG. 3;
FIG. 5 and FIG. 6 are three-dimensional views of a tire stud according to a third embodiment of the present invention (pre-insertion and inserted positions).

### Detailed Description Preferred Embodiments of the Invention

A tire stud is disclosed comprising a stud body comprising at least one polymer and a pin; wherein the stud body comprises a top portion P_{T}, an intermediate portion P_{I} and a bottom portion P_{B}, P_{T} being adjacent to P_{I} being adjacent to P_{B}; and wherein, in P_{B}, the tire stud further comprises n foldable anchoring elements E_{B}(n), with n = 1 or more, attached to the stud body, wherein each foldable anchoring element extends axially outward from the stud body.

Preferably, each anchoring element is foldable at the junction between said anchoring element and the stud body.

Preferably, n = 2 or more, such that the tire stud comprises two or more foldable anchoring elements E_{B}(n).

Preferably, when n = 2 or more, the junction between the anchoring elements and the stud body is located in the upper part of the bottom portion P_{B} of the stud body.

Preferably, when n = 2 or more, in P_{B}, the foldable anchoring elements are positioned in the same horizontal plan.

Preferably, n is in the range of from 2 to 10, more preferably in the range of from 2 to 8, more preferably in the range of from 3 to 6.

Preferably, in P_{B}, the tire stud comprises three foldable anchoring elements E_{B}(1), E_{B}(2) and E_{B}(3) or four foldable anchoring elements E_{B}(1), E_{B}(2), E_{B}(3) and E_{B}(4), which are spaced from one another, more preferably equally spaced from one another.

Preferably, when n = 2 or more, at least one anchoring element E_{B}(1) of the n foldable anchoring elements E_{B}(n), more preferably each element E_{B}(n), has a length L_{EB} in the range of from 0.25 to 6 mm, more preferably in the range of from 0.5 to 5 mm, more preferably in the range of from 1 to 4 mm, the length L_{EB} being the axial distance between the most outward end point of the element and the end point of the element in contact with the stud body.

Preferably, when n = 2 or more, one foldable anchoring element, more preferably each of the n foldable anchoring elements E_{B}(n) has a maximal width W_{EB} in the range of from 0.25 to 7 mm, more preferably in the range of from 0.5 to 6 mm, more preferably in the range of from 1 to 4 mm.

Preferably, when n = 2 or more, the foldable anchoring elements E_{B}(n) have a substantially rectangular shape, substantially triangular shape, half-moon shape or trapezoidal shape, more preferably a substantially rectangular shape.

Preferably, when n = 2 or more, the n foldable anchoring elements are foldable anchoring wings.

Preferably, when n = 2 or more, in P_{I}, the tire stud further comprises m foldable anchoring elements E_{I}(m), with m = 2 or more, attached to the stud body, wherein each foldable anchoring element E_{I}(m) extends axially outward from the stud body.

Preferably, m is in the range of from 2 to 10, more preferably in the range of from 2 to 8, more preferably in the range of from 3 to 6.

Preferably, in P_{T}, there is no foldable anchoring element.

Preferably, in P_{I}, there is no foldable anchoring element.

Alternatively, preferably, in P_{I}, the tire stud comprises three foldable anchoring elements E_{I}(1), E_{I}(2) and E_{I}(3) or four foldable anchoring elements E_{I}(1), E_{I}(2), E_{I}(3) and E_{I}(4) which are spaced from one another, more preferably equally spaced from one another.

Preferably, in P_{I}, the foldable anchoring elements E_{I}(m) are positioned in the same horizontal plan.

Preferably, the foldable anchoring elements E_{I}(m) of P_{I} are located in a plan parallel to the plan, wherein the foldable anchoring elements E_{B}(n) of P_{B} are located, with n = 2 or more.

Preferably, in P_{I}, at least one anchoring element, more preferably each element, of the m foldable anchoring elements E_{I}(m) has a length L_{EI} in the range of from 0.25 to 6 mm, more preferably in the range of from 0.5 to 5 mm, more preferably in the range of from 1 to 4 mm, the length L_{EI} being the axial distance between the most outward end point of the element and the end point of the element in contact with the stud body. Preferably, L_{EI} = L_{EB}.

Preferably, in P_{I}, one foldable anchoring element, more preferably each element, of the m foldable anchoring elements E_{I}(m) has a maximal width W_{EI} in the range of from 0.25 to 7 mm, more preferably in the range of from 0.5 to 6 mm, more preferably in the range of from 1 to 4 mm. Preferably, W_{EI} = W_{EB}.

Preferably, in P_{I}, the foldable anchoring elements E_{I}(m) have a substantially rectangular shape, substantially triangular shape, half-moon shape or trapezoidal shape, more preferably a substantially rectangular shape. More preferably, the foldable anchoring elements E_{I}(m) have the same shape as the foldable anchoring elements E_{B}(n).

Preferably, n = m.

Preferably, the m foldable anchoring elements E_{I}(m) are foldable anchoring wings.

In the context of the present invention, preferably, in P_{B}, the foldable anchoring elements E_{B}(n) comprise at least one polymer, more preferably the anchoring elements are made of the same at least one polymer of the stud body.

Preferably, the foldable anchoring elements E_{B}(n) are at least partially flexible. Preferably, the foldable anchoring elements E_{I}(m) are at least partially flexible.

Preferably, in P_{I}, the foldable anchoring elements E_{I}(m) comprise at least one polymer, more preferably the anchoring elements are made of the same at least one polymer of the stud body.

Preferably, all foldable anchoring elements of the tire stud are made of the same material as the material used for the stud body.

Preferably, the tire stud has an inserted position and a pre-insertion position, wherein, when n = 2 or more, at the inserted position, the foldable anchoring elements are folded and adjacent to the stud body, and, at the pre-insertion position, the foldable anchoring elements are unfolded at an angle, in the range of from 25 to 90°, more preferably in the range of from 35 to 90°, outward from the stud body.

As an alternative to the above, preferably, n = 1 such that the tire stud comprises one foldable anchoring element E_{B}(1).

Preferably, when n = 1, the foldable anchoring element is a foldable anchoring collar.

Preferably, when n = 1, the junction between the anchoring element and the stud body is located in the lower part of the bottom portion P_{B} of the stud body.

Preferably, the foldable anchoring collar has a maximal width is in the range of from 0.25 to 7 mm, more preferably in the range of from 0.5 to 6 mm, more preferably in the range of from 1 to 4 mm.

Preferably, the foldable anchoring collar has a regular circular shape or an irregular circular shape. When the collar has an irregular circular shape, it means that it can comprise one or more protrusions. Preferably, the foldable anchoring collar is attached all around the stud body and is foldable at the junction of the stud body and the collar.

Preferably, the foldable anchoring collar comprises at least one polymer, more preferably the foldable anchoring collar is made of the same at least one polymer of the stud body.

Preferably, the foldable anchoring collar is at least partially flexible.

Preferably, the foldable anchoring collar is made of the same material as the material used for the stud body.

Preferably, the tire stud has an inserted position and a pre-insertion position, wherein, when n = 1, at the inserted position, the foldable anchoring element is folded at an angle in the range of from 10 to 60°, more preferably in the range of from 15 to 50°, outward from the stud body, and, at the pre-insertion position, the foldable anchoring element is unfolded at an angle, of more than 90°, more preferably in the range of from 100 to 170°, more preferably in the range of from 115 to 140°, outward from the stud body.

In the context of the present invention, the stud body may have any shapes. Examples of shapes are illustrated in the figures of the present invention.

Preferably, the at least one polymer comprised in the stud body is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

In the context of the present invention, SPBD offers the advantage of becoming securely bound to the rubber of the tire tread. It is believed that the syndiotactic 1,2-polybutadiene (SPBD) co-cures with the rubber of the tire tread during the curing of the tire, resulting in a strong adhesion between the SPBD and the tire tread. SPBD can be prepared in an inert organic solvent utilizing the technique described in U.S. Patent No. 3,901,868 or in an aqueous medium utilizing the process described in U.S. Patent No. 4,506,031. The latter more specifically reveals a process for producing polybutadiene composed essentially of SPBD comprising the steps of:
(A) preparing a catalyst component solution by dissolving, in an inert organic solvent containing 1,3-butadiene
   (1) at least one cobalt compound selected from the group consisting of
      (a) beta-diketone complexes of cobalt,
      (b) beta-keto acid ester complexes of cobalt,
      (c) cobalt salts of organic carboxylic acids having 6 to 15 carbon atoms, and
      (d) complexes of halogenated cobalt compounds of the formula CoXn,
      wherein X represents a halogen atom and n represents 2 or 3, with an organic compound selected from the group consisting of tertiary amine alcohols, tertiary phosphines, ketones, and N,N-dialkylamides, and
   (2) at least one organoaluminum compound of the formula AIR3,
   wherein R represents a hydrocarbon radical of 1 to 6 carbon atoms;
(B) preparing a reaction mixture by mixing said catalyst component solution with a 1,3-butadiene/water mixture containing desired amounts of said 1,3-butadiene;
(C) preparing a polymerization mixture by mixing carbon disulfide throughout said reaction mixture, and
(D) polymerizing said 1,3-butadiene in said polymerization mixture into polybutadiene while agitating said polymerization mixture. In the process described therein the crystallinity and melting point of the SPBD can be controlled by adding alcohols, ketones, nitriles, aldehydes or amides to the polymerization mixture.

Preferably, the SPBD utilized for preparing the stud body comprised in the tire stud of the present invention has a melting point of 160°C or less, more preferably in the range of from 70°C to 160°C, more preferably in the range of from 80°C to 150°C, more preferably in the range of from 90°C to 125°C. The melting points referred to herein are the minimum endotherm values determined from DSC ( differential scanning calorimetry) curves.

It is conceivable that the stud body comprises a blend of polymers, including SPDB (from 25 to 75 weight - percent based on the weight of the blend) and at least one rubber (from 75 to 25 weight - percent based on the weight of the blend) which is curable with the SPBD. The rubber component used in such blends can be virtually any type of elastomer which contains unsaturation that allows for sulfur curing. Typically, the elastomer will be one or more polydiene rubbers. Some representative examples of suitable polydiene rubbers include cis-1,4-polybutadiene, natural rubber, synthetic polyisoprene, styrene butadiene rubber, EPDM (ethylenepropylene- diene monomer) rubbers, isoprene-butadiene rubbers, and styreneisoprene-butadiene rubbers. In many cases it will be desirable to utilize a combination of diene rubbers in the blend. For instance, the rubber portion of the blend can be a combination of chlorobutyl rubber, natural rubber, and EPDM rubber. Preferably, a the rubber component comprises from 30 to 80 weight - percent, more preferably from 55 to 65 weight - percent, chlorobutyl rubber, from 15 to 55 weight - percent, more preferably from 25 to 45 weight - percent, natural rubber, and from 2 to 10 weight - percent, more preferably from 3 to 7 weight - percent, EPDM, the weight percent being based on the weight of the rubber component.

In the context of the present invention, it is believed that the inclusion of high content of SPBD in the stud body results in better adhesion, abrasion, and tear resistance for the cured material. High contents of SPBD also result in increased green strength and stiffness. Additionally, it is believed that the use of high levels of SPBD reduces green tack which makes handling. However, the incorporation of large amounts of SPBD into the blend also results in reduced flexibility and modulus. Accordingly, for the best balance of overall properties, the blend utilized preferably contains from 33 to 67 weight - percent SPBD and from 67 to 33 weight - percent co-curable rubbers. More preferably, the blend in the stud body contains from 45 to 55 weight - percent SPBD and from 55 to 45 weight - percent of the elastomeric component.

The SPBD used for preparing the blend can be in powder or pellet form. The SPBD powder or pellets can be mixed into the rubber component utilizing standard mixing techniques. However, the mixing is normally carried out at a temperature which is at least as high as the melting point of the SPBD being utilized. During the mixing procedure, the SPBD powder pellets are fluxed into the rubber with additional desired compounding ingredients. Such mixing is typically carried out in a Banbury mixer, a mill mixer or in some other suitable type of mixing device.

Such blends of SPBD and rubber component may further contain other standard rubber chemicals. For instance, such blends may contain sulfur and at least one desired colorant or pigment, e.g. titanium dioxide can be of interest as it can be used as pigment and filler. They will also typically contain other rubber chemicals, such as antioxidants, accelerators, oils, and waxes in conventional amounts. The typical content of sulfur and first and secondary accelerators are disclosed in U.S. Patent Publication No. 2021/0008930 which is incorporated herein.

Alternatively or in addition to SPBD, other polymers, such as those disclosed in the foregoing, can be used for the stud body.

Optionally, the stud body is reinforced with one or more fibers. Preferably, the one or more fibers are glass fibers, woven fibers or staple fibers. The stud body may further comprise one or more of a pigment and a dye.

Preferably, the at least one polymer comprised in the n foldable anchoring elements E_{B}(n) of the tire stud is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

Preferably, the at least one polymer comprised in the m foldable anchoring elements E_{I}(n) of the tire stud is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

Optionally, the foldable anchoring element(s) of the tire stud is(are) reinforced with one or more fibers. Preferably, the one or more fibers are glass fibers, woven fibers or staple fibers. The foldable anchoring element(s) of the tire stud may further comprise one or more of a pigment and a dye.

Preferably, the stud body and the n foldable anchoring elements E_{B}(n) of the tire stud are made of the same material.

Preferably, the stud body and the m foldable anchoring elements E_{I}(m) of the tire stud are made of the same material.

Preferably, the stud body and the n foldable anchoring elements are produced in one piece.

Preferably, the stud body and the n foldable anchoring elements are formed/produced by injection molding or the like. Indeed, thanks to the stiffness and elasticity of the used polymer, the element(s) can be folded and unfolded at the junction stud body/element.

Preferably, the stud body and any foldable anchoring elements of the tire stud are produced in one piece. Preferably, the stud body and any foldable anchoring elements of the tire stud are formed/produced by injection molding or the like.

Preferably, the stud body presents one or more constrictions, wherein the width of the stud body in the one or more constriction areas is lower than the width of the stud body in the non-constriction areas.

Preferably, in the intermediate portion P_{I}, the stud body presents one or more constrictions, wherein the width of the stud body in the one or more constriction areas is lower than the width of the stud body in the non-constriction areas.

Preferably, the stud body presents one constriction.

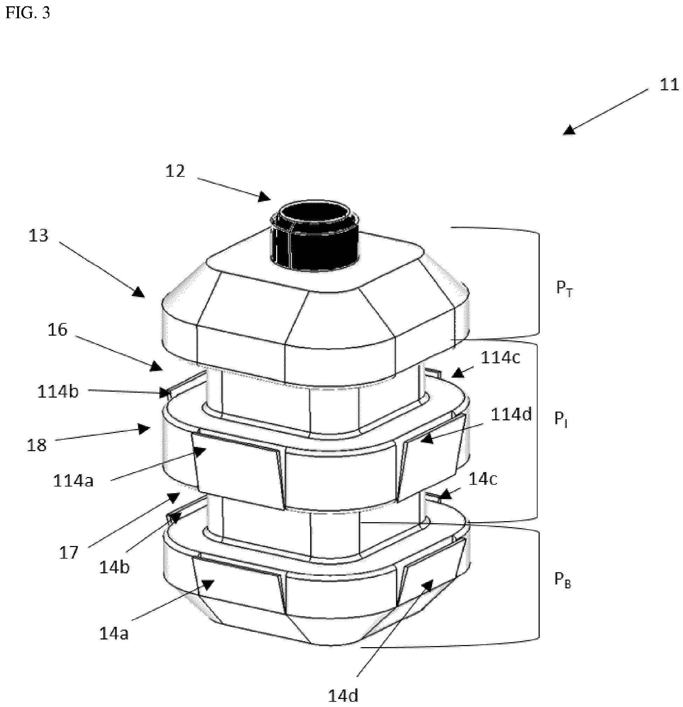

Alternatively, preferably, the stud body presents a constriction at the upper part of P_{I} and a constriction at the lower part of P_{I} with a bead between said constrictions. This is in particular illustrated in FIG. 3.

Preferably, in P_{I}, the tire stud further comprises m foldable anchoring elements E_{I}(m), with m = 2 or more, attached to the stud body, wherein each of said foldable anchoring elements extend axially, i.e. away, outward from the stud body.

Preferably, the width of the bead is equal to from 95 to 105 percent, more preferably from 98 to 102 percent, more preferably from 99 to 101 percent, of the maximal width of the stud body in the top portion.

Preferably, the width of the bead is equal to from 95 to 105 percent, more preferably from 98 to 102 percent, more preferably from 99 to 101 percent, of the maximal width of the stud body in the bottom portion.

Preferably, in P_{I}, the foldable anchoring elements E_{I}(m) are attached to the bead of the stud body.

Preferably, the foldable anchoring elements E_{I}(m) in P_{I} are as defined in the foregoing.

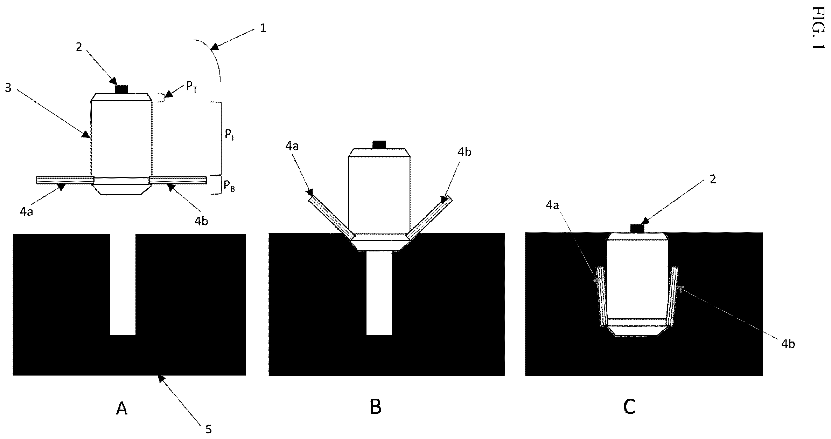

Alternatively, preferably, the stud body presents no constriction. This is in particular illustrated in FIG. 1, 5 and 6, wherein there is also no anchoring elements in P_{I} and P_{T}.

In the context of the present invention, it is preferred that the top portion P_{T}, the intermediate portion P_{I} and the bottom portion P_{B} of the stud body have the same or different shapes.

The present invention further relates to a pneumatic tire comprising at least one tire stud according to the present invention.

Preferably, the pneumatic tire further comprises a tread, wherein the tread comprises the at least one tire stud, more preferably a plurality of tire studs according to the present invention, embedded therein. The pin comprised in the at least one stud extends out of the tread.

Preferably, the pneumatic tire is a winter, snow and/or ice pneumatic tire.

The present invention is further illustrated by the following set of embodiments and combinations of embodiments resulting from the dependencies and back-references as indicated. In particular, it is noted that in each instance where a range of embodiments is mentioned, for example in the context of a term such as "The tire stud of any one of embodiments 1 to 3", every embodiment in this range is meant to be explicitly disclosed for the skilled person, i.e. the wording of this term is to be understood by the skilled person as being synonymous to "The tire stud of any one of embodiments 1, 2 and 3". Further, it is explicitly noted that the following set of embodiments represents a suitably structured part of the general description directed to preferred aspects of the present invention, and, thus, suitably supports, but does not represent the claims of the present invention.

According to embodiment 1 of the present invention relating to a tire stud, the tire stud comprises
- a stud body comprising at least one polymer;
- a pin;

wherein the stud body comprises a top portion P_{T}, an intermediate portion P_{I} and a bottom portion P_{B}, P_{T} being adjacent to P_{I} being adjacent to P_{B},
wherein, in P_{B}, the tire stud further comprises n foldable anchoring elements E_{B}(n), with n = 1 or more, attached to the stud body, wherein each foldable anchoring element extends axially outward, i.e. away, from the stud body.

### Embodiment 2:

The tire stud of embodiment 1, wherein each anchoring element is foldable at the junction between said anchoring element and the stud body.

### Embodiment 3:

The tire stud of embodiment 1 or 2, wherein, in P_{B}, the tire stud comprises three foldable anchoring elements E_{B}(1), E_{B}(2) and E_{B}(3) or four foldable anchoring elements E_{B}(1), E_{B}(2), E_{B}(3) and E_{B}(4), which are spaced from one another, preferably equally spaced from one another.

### Embodiment 4:

The tire stud of any one of embodiments 1 to 3, wherein, when n = 2 or more, at least one anchoring element E_{B}(1) of the n foldable anchoring elements W_{B}(n), preferably each element E_{B}(n), has a length L_{EB} in the range of from 0.25 to 6 mm, preferably in the range of from 0.5 to 5 mm, more preferably in the range of from 1 to 4 mm, the length L_{EB} being the axial distance between the most outward end point of the element and the end point of the element in contact with the stud body.

### Embodiment 5:

The tire stud of any one of embodiments 1 to 4, wherein, when n = 2 or more, one foldable anchoring element, preferably each, of the n foldable anchoring elements E_{B}(n) has a maximal width W_{EB} in the range of from 0.25 to 7 mm, preferably in the range of from 0.5 to 6 mm, more preferably in the range of from 1 to 4 mm.

### Embodiment 6:

The tire stud of any one of embodiments 1 to 5, wherein, when n = 2 or more, the foldable anchoring element E_{B}(n) have a substantially rectangular shape, substantially triangular shape, half-moon shape, or trapezoidal shape, preferably a substantially rectangular shape.

### Embodiment 7:

The tire stud of any one of embodiments 1 to 6, wherein, when n = 2 or more, the n foldable anchoring elements are foldable anchoring wings.

### Embodiment 8:

The tire stud of any one of embodiments 1 to 7, wherein, when n = 2 or more, in P_{I}, the tire stud further comprises m foldable anchoring elements E_{I}(m), with m = 2 or more, attached to the stud body, wherein each foldable anchoring element E_{I}(m) extends axially outward away from the stud body.

### Embodiment 9:

The tire stud of embodiment 8, wherein, in P_{I}, the tire stud comprises three foldable anchoring elements E_{I}(1), E_{I}(2) and E_{I}(3) or four foldable anchoring elements E_{I}(1), E_{I}(2), E_{I}(3) and E_{I}(4) which are spaced from one another, preferably equally spaced from one another.

### Embodiment 10:

The tire stud of any one of embodiments 1 to 9, wherein, in P_{B}, the foldable anchoring elements comprise at least one polymer, preferably the anchoring elements are made of the same at least one polymer of the stud body.

### Embodiment 11:

The tire stud of any one of embodiments 1 to 10, wherein the tire stud has an inserted position and a pre-insertion position, wherein, when n = 2 or more, at the inserted position, the foldable anchoring elements are folded and adjacent to the stud body and, at the pre-insertion position, the foldable anchoring elements are unfolded at an angle, in the range of from 25 to 90°, preferably in the range of from 35 to 90°, outward from the stud body.

### Embodiment 12:

The tire stud of any one of embodiments 1 to 11, wherein, when n = 1, the foldable anchoring element is a foldable anchoring collar, preferably wherein the tire stud has an inserted position and a pre-insertion position, wherein, when n = 1, at the inserted position, the foldable anchoring element is folded at an angle in the range of from 10 to 60°, more preferably in the range of from 15 to 50°, outward from the stud body, and, at the pre-insertion position, the foldable anchoring element is unfolded at an angle, of more than 90°, more preferably in the range of from 100 to 170 °, more preferably in the range of from 115 to 140°, outward from the stud body.

### Embodiment 13:

The tire stud of any one of embodiments 1 to 12, wherein the at least one polymer comprised in the stud body is selected from the group consisting of polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

### Embodiment 14:

The tire stud of any one of embodiments 1 to 13, wherein the stud body and the n foldable anchoring elements are produced in one piece, preferably by injection molding.

### Embodiment 15:

The tire stud of any one of embodiments 1 to 14, wherein, in the intermediate portion P_{I}, the stud body presents one or more constrictions, wherein the width of the stud body in the one or more constriction areas is lower than the width of the stud body in the non-constriction areas.

### Embodiment 16:

The tire stud of embodiment 15, wherein the stud body presents a constriction at the upper part of P_{I} and a constriction at the lower part of P_{I} with a bead between said constrictions, wherein, in P_{I}, the tire stud further comprises m foldable anchoring elements W_{I}(m), with m = 2 or more, attached to the stud body, wherein each of said foldable anchoring elements extend axially outward, i.e. away, from the stud body.

### Embodiment 17:

The tire stud of any one of embodiments 1 to 14, wherein the stud body presents no constriction.

### Embodiment 18:

A pneumatic tire comprising at least one tire stud according to any one of embodiments 1 to 17.

### Embodiment 19:

The pneumatic tire of embodiment 18, further comprising a tread, wherein the tread comprises the at least one tire stud, more preferably a plurality of tire studs according to any one of embodiments 1 to 17, embedded therein, wherein the pin comprised in the at least one stud extends out of the tread.

### Embodiment 20:

The pneumatic tire of embodiment 18 or 19, being a winter, snow and/or ice pneumatic tire.

FIG. 1 is a schematic cross-sectional view of the assembly of a tire stud according to a preferred embodiment of the present invention into a pneumatic tire tread. In particular, FIG. 1 shows the tire stud 1 according to the present invention in different positions A, B and C during its assembly into a pneumatic tire tread 5. Position A is the pre-insertion or expansion position, at which the anchoring wings E_{B}(1), E_{B}(2) numbered as 4 a and 4b are unfolded at an angle of about 90° outward from the stud body. Position B is the pre-insertion or expansion position, at which the anchoring wings are unfolded at an angle of about 30° outward from the stud body and position C is the inserted position at which the anchoring wings E_{B}(1), E_{B}(2) numbered as 4a, 4b are folded and adjacent to the stud body and the tire stud 1 is in the tread 5, with the pin 2 extending out of the tread 5. The tire stud 1 comprises a stud body 3 comprising at least one polymer as defined in the foregoing, the stud body comprising a top portion P_{T}, an intermediate portion P_{I} and a bottom portion P_{B}. The tire stud 1 further comprises a pin 2 which is inserted at the top of 3. In P_{B}, the tire stud 1 further comprises three foldable anchoring wings E_{B}(1), E_{B}(2) numbered as 4a, 4b and 4c and E_{B}(3) not shown in FIG. 1 which have the same dimensions and are spaced equally from one another in the same horizontal plan. The material of the wings is preferably the same material used for the stud body.

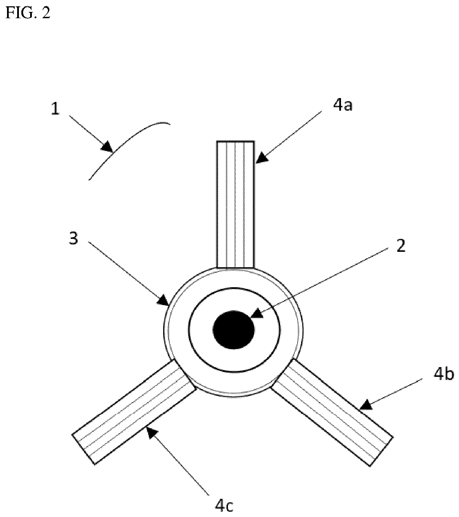

FIG. 2 is a schematic top view of a tire stud according to a preferred embodiment of the present invention, namely the tire stud 1 illustrated in FIG. 1. In FIG. 2, the three foldable wings E_{B}(1), E_{B}(2) and E_{B}(3), numbered as 4a, 4b and 4c, are visible.

FIG. 3 is a three-dimensional schematic view of a tire stud according to another preferred embodiment of the present invention. The tire stud 11 according to the present invention comprises a stud body 13 comprising at least one polymer as defined in the foregoing, the stud body comprising a top portion P_{T}, an intermediate portion P_{I} and a bottom portion P_{B}. The tire stud 11 further comprises a pin 12 which is inserted at the top of 13. In P_{B}, the tire stud 11 further comprises four foldable anchoring wings E_{B}(1), E_{B}(2), E_{B}(3) and E_{B}(4), numbered as 14a, 14b, 14c and 14d, which have the same dimensions and are spaced equally from one another in the same horizontal plan. The material of the wings E_{B}(1), E_{B}(2), E_{B}(3) and E_{B}(4) is preferably the same material used for the stud body. In P_{I}, the stud body comprises two constrictions 16, 17 forming a bead 18 between said constrictions and four foldable anchoring wings E_{I}(1), E_{I}(2), E_{I}(3) and E_{I}(4), numbered as 114a, 114b, 114c and 114d. FIG. 3 shows the tire stud in a pre-insertion position.

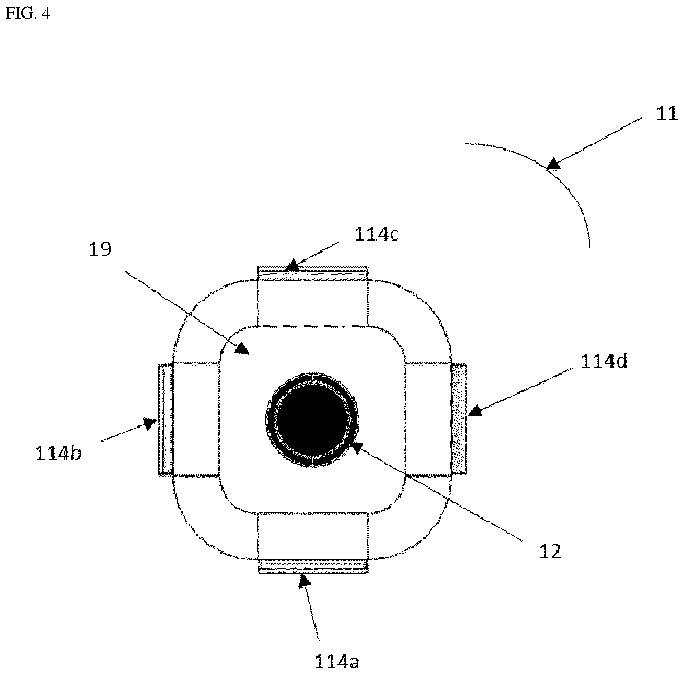

FIG. 4 is schematic top view of a tire stud according to a preferred embodiment of the present invention, namely the tire stud 11 illustrated in FIG. 3. In FIG. 4, only the four foldable wings E_{I}(1), E_{I}(2), E_{I}(3) and E_{I}(4), numbered as 114a, 114b, 114c and 114d, are visible. 19 represents the top of the stud body.

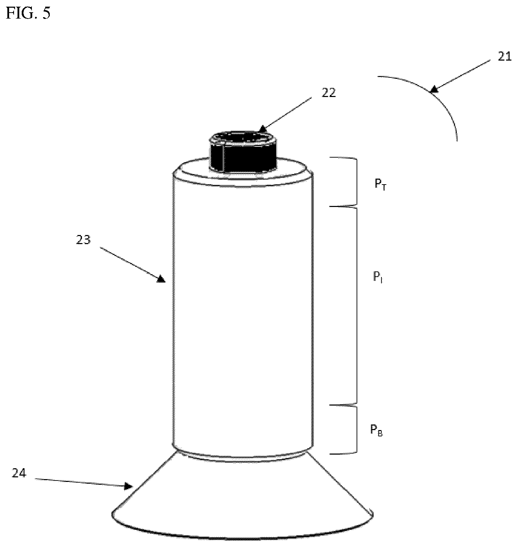

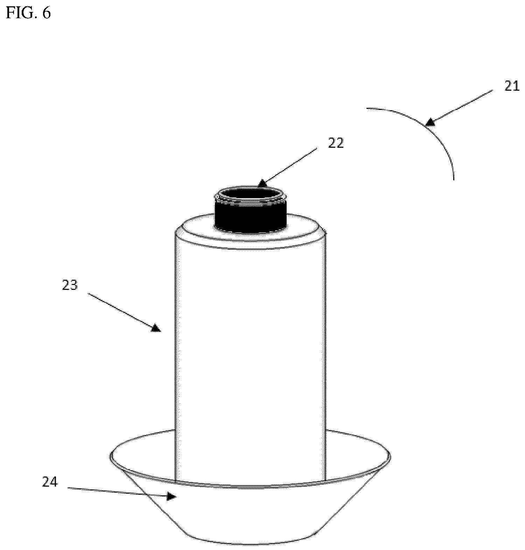

FIG. 5 is a three-dimensional schematic view of a tire stud according to another preferred embodiment of the present invention. The tire stud 21 according to the present invention comprises a stud body 23 comprising at least one polymer as defined in the foregoing, the stud body comprising a top portion P_{T}, an intermediate portion P_{I} and a bottom portion P_{B}. The tire stud 21 further comprises a pin 22 which is inserted at the top of 23. In P_{B}, the tire stud further comprises a foldable anchoring element E_{B}(1), namely a foldable anchoring collar, numbered as 24. FIG. 5 shows the tire stud in its pre-insertion/expansion position, namely the collar is unfolded at an angle of more than 100° outward from the stud body. The material of the anchoring element is preferably the same material used for the stud body. The anchoring element is at least partially flexible. The tire stud when inserted into a tire tread will then be in its inserted position, wherein the collar is flipped to be in the folded position which is illustrated in FIG. 6.

## Claims

1. A tire stud, the tire stud (1) having a stud body (3) comprising or consisting of at least one polymer and a pin (2), wherein the stud body (3) comprises a radially outer top portion (P_{T}), an intermediate portion (P_{I}) and a radially inward bottom portion (P_{B}), the outer portion (P_{T}) being radially adjacent the intermediate portion (P_{I}) and the intermediate portion (P_{I}) being adjacent to the inward bottom portion (P_{B}), and wherein, in the radially inward bottom portion (P_{B}), the tire stud (1) further comprises at least one foldable or bendable anchoring element (4a, 4b, 4c) attached to the stud body (3), said anchoring element (4a, 4b, 4c) extending away from the stud body (3).

2. The tire stud of claim 1, wherein each anchoring element (4a, 4b, 4c) is foldable or bendable at the junction between said anchoring element (4a, 4b, 4c) and the stud body (3).

3. The tire stud of claim 1 or 2, wherein the tire stud (1) comprises three or four of said anchoring elements (4a, 4b, 4c), said anchoring elements (4a, 4b, 4c) being preferably radially spaced from one another and/or said anchoring elements (4a, 4b, 4c) being preferably spaced circumferentially around the stud body (3) from one another.

4. The tire stud of at least one of the previous claims, wherein, when there are at least two or more such anchoring elements (4a, 4b, 4c), at least one anchoring element (4a, 4b, 4c) of said anchoring elements (4a, 4b, 4c) has a length in the range of from 0.25 to 6 mm, preferably of from 0.5 mm to 3 mm, said length being the axial distance between the axially most outward end point of the respective anchoring element (4a, 4b, 4c) and the axially inner end point of the anchoring element (4a, 4b, 4c) in contact with the stud body (3).

5. The tire stud of at least one of the previous claims, wherein, when viewed in top view along the axis from the radially outer top portion (P_{T}) to the radially inward bottom portion (P_{B}) onto the anchoring element (4a, 4b, 4c), the anchoring element (4a, 4b, 4c) has a substantially rectangular shape, substantially triangular shape, a substantially half-moon shape, a wing shape or a substantially trapezoidal shape.

6. The tire stud of at least one of the previous claims, wherein the tire stud (1) further comprises at least one foldable or bendable further anchoring element (114a, 114b, 114c, 114d) attached to the stud body (3), wherein said further anchoring element (114a, 114b, 114c, 114d) extends away from the stud body (3) and is attached to the stud body (3) in the intermediate portion (P_{I}), and, optionally, wherein each further anchoring element (114a, 114b, 114c, 114d) is foldable or bendable at the junction between said further anchoring element (114a, 114b, 114c, 114d) and the stud body (3).

7. The tire stud of claim 6 , wherein the tire stud (1) comprises three or four of said further anchoring elements (114a, 114b, 114c, 114d), said further anchoring elements (114a, 114b, 114c, 114d) being preferably radially spaced from one another and/or said further anchoring elements (114a, 114b, 114c, 114d) being preferably spaced circumferentially around the stud body (3) from one another.

8. The tire stud of at least one of the previous claims, wherein said anchoring elements (4a, 4b, 4c) and/or said further anchoring elements (114a, 114b, 114c, 114d) comprise or consist of at least one polymer.

9. The tire stud of at least one of the previous claims, wherein said anchoring element (4a, 4b, 4c) and/or said further anchoring element (114a, 114b, 114c, 114d) is a foldable or bendable anchoring collar extending about the stud body (3).

10. The tire stud of at least one of the previous claims, wherein the at least one polymer of the stud body (3) is selected from the group consisting of polyetheretherketone (PEEK), polyphenylene sulfide (PPS), polyphenols ether (PPE), polypropylene (PP), polyethylene (PE), polycarbonate (PC), polysulfone (PSU), polyetherimide (PEI), polyphenylene sulfone (PPSU), polyarylamide (PARA), polyamine (PA), syndiotactic 1,2-polybutadiene (SPBD), phenolic resin, melamine resin, epoxy resin, benzoxazine-based polymer, cyanate ester resin, polyurethane (PU), polyacrylic ester, a polyimide and a mixture of two or more thereof.

11. The tire stud of at least one of the previous claims, wherein, in the intermediate portion (P_{I}), the stud body (3) presents one or more constriction areas (16, 17), said one or more constriction areas (16, 17) preferably extending circumferentially around the intermediate portion (P_{I}) of the stud body (3), the axial width of the stud body (3) in the one or more constriction areas (16, 17) being lower than the axial width of the stud body (3) in the non-constriction areas of the intermediate portion (P_{I}).

12. The tire stud of claim 11, wherein the stud body (3) presents a first constriction area (16) at a radially upper part of the intermediate portion (P_{I}), a second constriction area (17) at a radially lower part of the intermediate portion (P_{I}), and a bead (18) or rim radially between said constrictions areas (16, 17).

13. The tire stud of at least one of the previous claims, wherein the stud body (3) and the anchoring elements (4a, 4b, 4c) and/or the further anchoring elements (114a, 114b, 114c, 114d) are integrally formed as one piece.

14. A tire having a tread, wherein the tread comprises at least one tire stud (1) according to at least one of the previous claims, and wherein the tire stud (1) is inserted in the tread and the pin (2) extends radially out of the surface of the tread.

15. A method of inserting a tire stud according to at least one of the previous claims 1 to 13 into a tread of a tire, the method comprising:
(i) providing the tire stud (1) with the anchoring the anchoring elements (4a, 4b, 4c) and/or the further anchoring elements (114a, 114b, 114c, 114d) being in a pre-insertion position and extending at an angle in the range of from 15° to 90° or from 25° to 90° with respect to the radial direction away from the stud body (3); and
(ii) inserting the tire stud (1) in the tire tread and bringing the anchoring elements (4a, 4b, 4c) and/or the further anchoring elements (114a, 114b, 114c, 114d) in an insertion position being folded or bent and adjacent to the stud body (3) or extending at an angle in the range of from 0° to 10°with respect to the radial direction away from the stud body (3).

## Patentansprüche

1. Spike für einen Reifen, wobei der Spike (1) für einen Reifen einen Körper des Spikes (3), der mindestens ein Polymer umfasst oder aus diesem besteht, sowie einen Stift (2) besitzt, wobei der Körper des Spikes (3) einen in der radialen Richtung äußeren oberen Abschnitt (P_{T}), einen mittleren Abschnitt (P_{I}) und einen in der radialen Richtung inneren unteren Abschnitt (P_{B}) umfasst; wobei der äußere Abschnitt (P_{T}) in der radialen Richtung an den mittleren Abschnitt (P_{I}) angrenzt und wobei der mittlere Abschnitt (P_{I}) an den inneren unteren Abschnitt (P_{B}) angrenzt; und wobei der Spike für einen Reifen (1) in dem in der radialen Richtung inneren unteren Abschnitt (P_{B}) ferner mindestens ein biegbares oder biegbares Verankerungselement (4a, 4b, 4c) umfasst, das an dem Körper des Spikes (3) befestigt ist, wobei das genannte Verankerungselement (4a, 4b, 4c) sich von dem Körper des Spikes (3) weg erstreckt.

2. Spike für einen Reifen nach Anspruch 1, wobei jedes Verankerungselement (4a, 4b, 4c) an der Verbindungsstelle zwischen dem oben genannten Verankerungselement (4a, 4b, 4c) und dem Körper des Spikes (3) faltbar oder biegbar ist.

3. Spike für einen Reifen nach Anspruch 1 oder 2, wobei der Spike (1) für einen Reifen drei oder vier der oben genannten Verankerungselemente (4a, 4b, 4c) umfasst, wobei die oben genannten Verankerungselemente (4a, 4b, 4c) vorzugsweise in der radialen Richtung voneinander beabstandet sind und/oder wobei die oben genannten Verankerungselemente (4a, 4b, 4c) vorzugsweise in der Umfangsrichtung um den Körper des Spikes (3) voneinander beabstandet sind.

4. Spike für einen Reifen nach mindestens einem der vorhergehenden Ansprüche, wobei, wenn mindestens zwei oder mehr solcher Verankerungselemente (4a, 4b, 4c) vorgesehen sind, mindestens ein Verankerungselement (4a, 4b, 4c) der oben genannten Verankerungselemente (4a, 4b, 4c) eine Länge besitzt, die in dem Bereich von 0,25 bis 6 mm, vorzugsweise von 0,5 mm bis 3 mm liegt, wobei die oben genannte Länge den axialen Abstand darstellt, der sich zwischen dem in der axialen Richtung äußersten Endpunkt des jeweiligen Verankerungselements (4a, 4b, 4c) und dem in axialer Richtung inneren Endpunkt des Verankerungselements (4a, 4b, 4c), das mit dem Körper des Spikes (3) in Kontakt kommt, erstreckt.

5. Spike für einen Reifen nach mindestens einem der vorhergehenden Ansprüche, wobei, wenn man in einer Draufsicht entlang der Achse, die sich zwischen dem oberen Abschnitt (P_{T}), der in der radialen Richtung außen liegt, und dem unteren Abschnitt (P_{B}), der in der radialen Richtung innen liegt, auf dem Verankerungselement (4a, 4b, 4c) erstreckt, das Verankerungselement (4a, 4b, 4c) eine im Wesentlichen rechteckige Form, eine im Wesentlichen dreieckige Form, eine im Wesentlichen halbmondförmige Form, eine flügelförmige Form oder eine im Wesentlichen trapezförmige Form besitzt.

6. Spike für einen Reifen nach mindestens einem der vorhergehenden Ansprüche, wobei der Spike (1) für einen Reifen ferner mindestens ein weiteres Verankerungselement (114a, 114b, 114c, 114d) umfasst, das gefaltet oder gebogen werden kann, das an dem Körper des Spikes (3) befestigt ist, wobei das weitere Verankerungselement (114a, 114b, 114c, 114d) sich von dem Körper des Spikes (3) weg erstreckt und in dem Zwischenabschnitt (P_{I}) an dem Körper des Spikes (3) befestigt ist, und, optional, wobei jedes weitere Verankerungselement (114a, 114b, 114c, 114d) an der Verbindungsstelle zwischen dem weiteren Verankerungselement (114a, 114b, 114c, 114d) und dem Körper des Spikes (3) gefaltet oder gebogen werden kann.

7. Spike für einen Reifen nach Anspruch 6, wobei der Spike für einen Reifen (1) drei oder vier der oben genannten weiteren Verankerungselemente (114a, 114b, 114c, 114d) umfasst; wobei die weiteren Verankerungselemente (114a, 114b, 114c, 114d) vorzugsweise in der radialen Richtung voneinander beabstandet sind und/oder wobei die oben genannten weiteren Verankerungselemente (114a, 114b, 114c, 114d) vorzugsweise in der Umfangsrichtung um den Körper des Spikes (3) voneinander beabstandet sind.

8. Spike für einen Reifen nach mindestens einem der vorhergehenden Ansprüche, wobei die Verankerungselemente (4a, 4b, 4c) und/oder die weiteren Verankerungselemente (114a, 114b, 114c, 114d) mindestens ein Polymer umfassen oder aus diesem bestehen.

9. Spike für einen Reifen nach mindestens einem der vorhergehenden Ansprüche, wobei das Verankerungselement (4a, 4b, 4c) und/oder das weitere Verankerungselement (114a, 114b, 114c, 114d) ein Kragen ist, der gefaltet oder gebogen werden kann und sich um den Körper des Spikes (3) erstreckt.

10. Spike für einen Reifen nach mindestens einem der vorhergehenden Ansprüche, wobei das mindestens eine Polymer des Körpers des Spikes (3) aus der Gruppe ausgewählt wird, die aus Polyetheretherketon (PEEK), Polyphenylensulfid (PPS), Polyphenolethern (PPE), Polypropylen (PP), Polyethylen (PE), Polycarbonat (PC), Polysulfon (PSU), Polyetherimid (PEI), Polyphenylensulfon (PPSU), Polyarylamid (PARA), Polyamin (PA), syndiotaktisches 1,2-Polybutadien (SPBD), Phenolharz, ein Harz vom Melamintyp, ein Epoxidharz, ein Polymer auf Benzoxazinbasis, ein Harz vom Cyanatester-Typ, Polyurethan (PU), Polyacrylsäureester, ein Polyimid und aus einer Mischung aus zwei oder mehreren davon besteht.

11. Spike für einen Reifen nach mindestens einem der vorhergehenden Ansprüche, wobei der Körper des Spikes (3) in dem Zwischenabschnitt (P_{I}) eine oder mehrere Verengungszonen (16, 17) aufweist, wobei die einen oder mehreren Verengungszonen (16, 17) sich vorzugsweise in der Umfangsrichtung um den Zwischenabschnitt (P_{I}) des Körpers des Spikes (3) erstrecken, und wobei die axiale Breite des Körpers des Spikes (3) in den einen oder mehreren Verengungszonen (16, 17) kleiner ist als die axiale Breite des Körpers des Spikes (3) in den nicht verengten Zonen des Zwischenabschnitts (P_{I}).

12. Spike für einen Reifen nach Anspruch 11, wobei der Körper des Spikes (3) eine erste Verengungszone (16) in einem in der radialen Richtung oberen Teil des Zwischenabschnitts (P_{I}), eine zweite Verengungszone (17) in einem in der radialen Richtung unteren Abschnitt des Zwischenabschnitts (P_{I}) und einen Wulst (18) oder einen Rand in der radialen Richtung, zwischen den oben genannten Verengungszonen (16, 17) hat.

13. Spike für einen Reifen nach mindestens einem der vorhergehenden Ansprüche, wobei der Körper des Spikes (3) und die Verankerungselemente (4a, 4b, 4c) und/oder die weiteren Verankerungselemente (114a, 114b, 114c, 114d) so gestaltet sind, dass sie ein einziges Teil bilden.

14. Reifen, der eine Lauffläche besitzt, wobei die Lauffläche mindestens einen Spike für einen Reifen (1) nach mindestens einem der vorhergehenden Ansprüche umfasst und wobei der Spike für einen Reifen (1) in die Lauffläche eingesetzt ist und der Stift (2) sich in radialer Richtung außerhalb der Oberfläche der Lauffläche erstreckt.

15. Verfahren zum Einbringen eines Spikes für einen Reifen gemäß mindestens einem der vorhergehenden Ansprüche 1 bis 13 in eine Lauffläche eines Reifens, wobei das Verfahren umfasst:
(i) das Bereitstellen des Spikes für einen Reifen (1) mit den Verankerungselementen (4a, 4b, 4c) und/oder den weiteren Verankerungselementen (114a, 114b, 114c, 114d) in einer Voreinführungsposition und sich unter einem Winkel in dem Bereich von 15° bis 90° oder von 25° bis 90° in Bezug auf die radiale Richtung weg von dem Körper des Spikes (3) erstreckend; und
(ii) das Einführen des Spikes für einen Reifen (1) in die Lauffläche des Reifens und das Bringen der Verankerungselemente (4a, 4b, 4c) und/oder der weiteren Verankerungselemente (114a, 114b, 114c, 114d) in eine Einführposition, in der sie gefaltet oder gebogen benachbart zu dem Körper des Spikes (3) sind oder sich unter einem Winkel im Bereich von 0° bis 10° in Bezug auf die radiale Richtung von dem Körper des Spikes (3) weg erstrecken.

## Revendications

1. Crampon pour un bandage pneumatique dans lequel le crampon pour un bandage pneumatique (1) possède un corps de crampon (3) qui comprend ou qui est constitué par au moins un polymère ainsi qu'une tige (2), dans lequel le corps de crampon (3) comprend une portion supérieure (P_{T}) externe dans la direction radiale, une portion intermédiaire (P_{I}) et une portion inférieure (P_{B}) interne dans la direction radiale, dans lequel la portion externe (P_{T}) est située, dans la direction radiale, en position adjacente à la portion intermédiaire (P_{I}), dans lequel la portion intermédiaire (P_{I}) est située en position adjacente à la portion inférieure interne (P_{B}) et dans lequel, dans la portion inférieure (P_{B}), interne dans la direction radiale, le crampon pour un bandage pneumatique (1) comprend en outre au moins un élément d'ancrage qui peut être plié ou qui peut être fléchi (4a, 4b, 4c), fixé au corps de crampon (3), dans lequel ledit élément d'ancrage (4a, 4b, 4c) s'étend à l'écart du corps de crampon (3).

2. Crampon pour un bandage pneumatique selon la revendication 1, dans lequel chaque élément d'ancrage (4a, 4b, 4c) peut être plié ou peut être fléchi à la jonction entre ledit élément d'ancrage (4a, 4b, 4c) et le corps de crampon (3).

3. Crampon pour un bandage pneumatique selon la revendication 1 ou 2, dans lequel le crampon pour un bandage pneumatique (1) comprend trois ou quatre desdits éléments d'ancrage (4a, 4b, 4c), dans lequel lesdits éléments d'ancrage (4a, 4b, 4c) sont de préférence espacés les uns des autres dans la direction radiale et/ou dans lequel lesdits éléments d'ancrage (4a, 4b, 4c) sont de préférence espacés les uns des autres dans la direction circonférentielle autour du corps de crampon (3).

4. Crampon pour un bandage pneumatique selon au moins une des revendications précédentes, dans lequel, lorsque l'on prévoit au moins deux éléments d'ancrage (4a, 4b, 4c) de ce type ou plus, au moins un élément d'ancrage (4a, 4b, 4c) parmi lesdits éléments d'ancrage (4a, 4b, 4c) possède une longueur qui se situe dans la plage allant de 0,25 à 6 mm, de préférence de 0,5 mm à 3 mm ; dans lequel ladite longueur représente la distance axiale qui s'étend entre le point terminal, le plus externe dans la direction axiale, de l'élément d'ancrage respectif (4a, 4b, 4c) et le point terminal, interne dans la direction axiale, de l'élément d'ancrage (4a, 4b, 4c) qui entre en contact avec le corps de crampon (3).

5. Crampon pour un bandage pneumatique selon au moins une des revendications précédentes, dans lequel, lorsque l'on regarde dans une vue de sommet le long de l'axe qui s'étend entre la portion supérieure (P_{T}), externe dans la direction radiale et la portion inférieure P_{B}), interne dans la direction radiale sur l'élément d'ancrage (4a, 4b, 4c), l'élément d'ancrage (4a, 4b, 4c) possède une configuration de forme essentiellement rectangulaire, une configuration de forme essentiellement triangulaire, une configuration essentiellement en forme de demi-lune, une configuration en forme d'aile ou une configuration de forme essentiellement trapézoïdale.

6. Crampon pour un bandage pneumatique selon au moins une des revendications précédentes, dans lequel le crampon pour un bandage pneumatique (1) comprend en outre au moins un élément d'ancrage supplémentaire (114a, 114b, 114c, 114d) qui peut être plié ou qui peut être fléchi, fixé au corps de crampon (3) ; dans lequel ledit élément d'ancrage supplémentaire (114a, 114b, 114c, 114d) s'étend à l'écart du corps de crampon (3) et est fixé au corps de crampon (3) dans la portion intermédiaire (P_{I}), et, de manière facultative, dans lequel chaque élément d'ancrage supplémentaire (114a, 114b, 114c, 114d) peut être plié ou peut être fléchi à la jonction entre ledit élément d'ancrage supplémentaire (114a, 114b, 114c, 114d) et le corps de crampon (3).

7. Crampon pour un bandage pneumatique selon la revendication 6, dans lequel le crampon pour un bandage pneumatique (1) comprend trois ou quatre desdits éléments d'ancrage supplémentaires (114a, 114b, 114c, 114d) ; dans lequel lesdits éléments d'ancrage supplémentaires (114a, 114b, 114c, 114d) sont de préférence espacés les uns des autres dans la direction radiale et/ou dans lequel lesdits éléments d'ancrage supplémentaires (114a, 114b, 114c, 114d) sont de préférence espacés les uns des autres dans la direction circonférentielle autour du corps de crampon (3).

8. Crampon pour un bandage pneumatique selon au moins une des revendications précédentes, dans lequel lesdits éléments d'ancrage (4a, 4b, 4c) et/ou lesdits éléments d'ancrage supplémentaires (114a, 114b, 114c, 114d) comprennent ou sont constitués par au moins un polymère.

9. Crampon pour un bandage pneumatique selon au moins une des revendications précédentes, dans lequel ledit élément d'ancrage (4a, 4b, 4c) et/ou ledit élément d'ancrage supplémentaire (114a, 114b, 114c, 114d) représente(nt) un manchon d'extrémité qui peut être plié ou qui peut être fléchi, qui s'étend autour du corps de crampon (3).

10. Crampon pour un bandage pneumatique selon au moins une des revendications précédentes, dans lequel ledit au moins un polymère du corps de crampon (3) est choisi parmi le groupe constitué par de la polyétheréthercétone (PEEK), du polyphénylène sulfure (PPS), des éthers de polyphénols (PPE), du polypropylène (PP), du polyéthylène (PE), du polycarbonate (PC), de la polysulfone (PSU), du polyétherimide (PEI), de la polyphénylène sulfone (PPSU), du polyarylamide (PARA), de la polyamine (PA), du 1,2-polybutadiène syndiotactique (SPBD), une résine phénolique, une résine du type mélamine, une résine époxy, un polymère à base de benzoxazine, une résine de type ester de cyanate, du polyuréthane (PU), de l'ester polyacrylique, un polyimide, et un mélange de deux ou plusieurs d'entre eux.

11. Crampon pour un bandage pneumatique selon au moins une des revendications précédentes, dans lequel, dans la portion intermédiaire (P_{I}), le corps de crampon (3) présente une ou plusieurs zones d'étranglement (16, 17) ; dans lequel lesdites une ou plusieurs zones d'étranglement (16, 17) s'étendent de préférence dans la direction circonférentielle autour de la portion intermédiaire (P_{I}) du corps de crampon (3) ; dans laquelle la largeur axiale du corps de crampon (3), dans lesdites une ou plusieurs zones d'étranglement (16, 17), est inférieure à la largeur axiale du corps de crampon (3) dans les zones de non étranglement de la portion intermédiaire (P_{I}).

12. Crampon pour un bandage pneumatique selon la revendication 11, dans lequel le corps de crampon (3) présente une première zone d'étranglement (16) dans une partie supérieure, dans la direction radiale, de la portion intermédiaire (P_{I}), une deuxième zone d'étranglement (17) dans une partie inférieure, dans la direction radiale, de la portion intermédiaire (P_{I}) et un talon (18) ou une jante, dans la direction radiale, entre lesdites zones d'étranglement (16, 17).

13. Crampon pour un bandage pneumatique selon au moins une des revendications précédentes, dans lequel le corps de crampon (3) et les éléments d'ancrage (4a, 4b, 4c) et/ou les éléments d'ancrage supplémentaires (114a, 114b, 114c, 114d) sont réalisés pour ne former qu'une seule pièce.

14. Bandage pneumatique qui possède une bande de roulement ; dans lequel la bande de roulement comprend au moins un crampon pour un bandage pneumatique (1) en conformité avec au moins une des revendications précédentes ; et dans lequel le crampon pour un bandage pneumatique (1) est inséré dans la bande de roulement et la tige (2) s'étend, dans la direction radiale, à l'extérieur de la surface de la bande de roulement.

15. Procédé d'insertion d'un crampon pour un bandage pneumatique en conformité avec au moins une des revendications précédentes 1 à 13, dans une bande de roulement d'un bandage pneumatique, le procédé comprenant :
(i) mettre à disposition un crampon pour un bandage pneumatique (1) avec les éléments d'ancrage (4a, 4b, 4c) et/ou des éléments d'ancrage supplémentaires (114a, 114b, 114c, 114d) dans une position de pré-insertion et s'étendrant sous un angle dans la plage entre 15° à 90° ou de 25° à 90° par rapport à la direction radiale à l'écart du corps de crampon (3) ; et
(ii) l'insertion du crampon pour un bandage pneumatique (1) dans la bande de roulement du bandage pneumatique et le placement des éléments d'ancrage (4a, 4b, 4c) et/ou des éléments d'ancrage supplémentaires (114a, 114b, 114c, 114d) dans une position d'insertion, en les soumettant à un pliage ou à un fléchissement, et dans une position adjacente au corps de crampon (3), ou en les soumettant à une extension, si bien qu'ils forment un angle qui se situe dans la plage allant de 0° à 10° par rapport à la direction radiale, à l'écart du corps de crampon (3).
